# EUROPÄISCHE PATENTSCHRIFT

(11) **EP 3 453 911 B1**
(45) Veröffentlichungstag und Bekanntmachung des Hinweises auf die Patenterteilung: **04.11.2020**
(21) Anmeldenummer: 18192455.6
(22) Anmeldetag: 04.09.2018
(51) Int. Cl.: F16F 1/38

(54) **GUMMILAGER**
RUBBER BEARING
PALIER EN CAOUTCHOUC

(30) Priorität: 05.09.2017 DE 102017120436
(43) Veröffentlichungstag der Anmeldung: 13.03.2019
(73) Patentinhaber: BOGE Elastmetall GmbH, 49401 Damme (DE)
(72) Erfinder: FRANKE, Tim-Malte, 49090 Osnabrück (DE)
(74) Vertreter: Bossmeyer, Jörg Peter

(56) Entgegenhaltungen:
- EP-A1- 0 544 112
- WO-A1-2017/031266
- US-A- 2 562 381

## Beschreibung

Die Erfindung betrifft ein Gummilager nach dem Oberbegriff des Anspruchs 1.

Die DE 10 2006 021 011 A1 offenbart ein elastomeres Buchsenlager, bestehend aus einem metallischen Innenteil mit einer kreisförmigen oder elliptischen Querschnittsfläche und einer sich in axialer Richtung durch das Innenteil erstreckenden Durchtrittsöffnung, einer zylinderförmigen, das Innenteil umgebenden Außenhülse und einem zwischen dem Innenteil und der Außenhülse angeordneten, zumindest mit dem Innenteil durch Vulkanisation haftend verbundenen elastomeren Lagerkörper, wobei die Außenhülse an ihren axialen Enden je eine umlaufende, in Richtung des Innenteils weisende Bördelung aufweist. Beide axiale Stirnflächen des Lagerkörpers weisen sowohl zueinander, als auch über den gesamten Bereich der radialen Materialstärke des Lagerkörpers in der Umfangsrichtung gleichsinnig verlaufende, wellenförmige Konturen auf, sodass jeweils die Wellentäler und jeweils die Wellenkämme der Konturen beider Stirnflächen einander gegenüberliegen und die der Erstreckung in axialer Richtung entsprechende Höhe des Lagerkörpers in der Umfangsrichtung, ohne Ausbildung abrupter Absätze, stetig variiert. Zwar können mit diesem Buchsenlager unterschiedliche radiale Steifigkeiten eingestellt werden, ein Nachteil ergibt sich jedoch durch die wellenförmige Geometrie des elastomeren Lagerkörpers, welche die axiale Steifigkeit des Buchsenlagers reduziert.

Die DE 10 2008 008 246 A1 beschreibt ein elastomeres Buchsenlager, bestehend aus einem metallischen, bezüglich einer Lagerachse rotationssymmetrischen Innenteil, einer konzentrisch zu dem Innenteil angeordneten Außenhülse, einem zwischen dem Innenteil und der Außenhülse angeordneten und mit dem Innenteil durch Vulkanisation verbundenen elastomeren Lagerkörper und mindestens einem zwischen dem Innenteil und der Außenhülse angeordneten, in den Lagerkörper einvulkanisierten Zwischenblech, wobei das Innenteil und das mindestens eine Zwischenblech in einem axial mittleren Bereich bauchig erweitert sind und das Buchsenlager mindestens einen in radialer Richtung die Außenhülse, das oder die Zwischenbleche sowie den Lagerkörper mindestens im Bereich zwischen der Außenhülse und dem innersten Zwischenblech vollständig durchragenden, sich jeweils über die gesamte axiale Länge erstreckenden Längsschlitz aufweist und wobei das Innenteil an mindestens einem seiner axialen Enden in seinem Außendurchmesser erweitert ist. Bei diesem Buchsenlager kann das Verhältnis zwischen radialer und axialer Steifigkeit nicht sehr gering eingestellt werden, da es axial nicht kalibrierbar ist.

Die US 2 562 381 A offenbart eine elastische Lagerbuchse mit einem Innenteil in Form eines Bolzens, der einen Bolzenzentralabschnitt größeren Durchmessers, Bolzenendabschnitte kleineren Durchmessers und Bolzenschultern aufweist, welche die Bolzenendabschnitte mit dem Bolzenzentralabschnitt verbinden. Die

Lagerbuchse weist ein Außenteil in Form einer axial geteilten Hülse auf, die einen um den Bolzenzentralabschnitt des Innenteils herum verlaufenden Hülsenmittenabschnitt und Hülsenendabschnitte mit einem reduzierten Durchmesser aufweist, der kleiner als der Durchmesser des Bolzenzentralabschnitts des Innenteils ist. Ferner weist die Lagerbuchse einen Gummieinsatz auf, der in einen zwischen dem Innenteil und dem Außenteil vorgesehenen Ringraum eingebracht ist. Das Außenteil weist konische Stirnwände auf, die von dem Hülsenmittenabschnitt in die Hülsenendabschnitte übergehen. In den konischen Stirnwänden sind mehrere nach außen gekrümmte Bereiche vorgesehen. Das Außenteil besteht aus zwei durch Längsschlitze voneinander getrennten Halbschalen. Ferner sind in dem Außenteil drei in Längsrichtung hintereinander angeordnete Löcher vorgesehen.

Die WO 2017/031266 A1 beschreibt eine Lagerbuchsen-Baugruppe zum Verbinden von Fahrzeugkomponenten, mit einem Bolzen, der an wenigstens einem Ende wenigstens eine sich durch dieses hindurch erstreckende Bohrung zur Aufnahme eines Befestigungsmittels und einen Bolzenzentralabschnitt aufweist, dessen Durchmesser größer als die Breite oder der Durchmesser des wenigstens einen Endabschnitts ist, einem den Bolzenzentralabschnitt mit einheitlicher Dicke umringenden Gummikörper, der ferner dem Bolzenzentralabschnitt benachbarte und sich in Richtung von diesem weg verjüngende Bolzenabschnitte umringt, und mehreren an den Gummikörper anvulkanisierten Metallhülsen-Segmenten, die derart ausgebildet sind, dass sie den Gummikörper komprimieren, wenn die Lagerbuchsen-Baugruppe in eine Nabe eingebracht wird. Vor dem Komprimieren sind zwischen den Metallhülsen-Segmenten Längsschlitze und im Bereich der Längsschlitze längliche Ausnehmungen in dem Gummikörper vorgesehen, wobei die Längsschlitze durch das Komprimieren geschlossen werden.

Die EP 0 544 112 A1 offenbart ein Gelenklager für die Lagerung von Lenkern in Kraftfahrzeugen, bestehend aus einem metallischen Gehäuse mit zylindrischem Innenmantel, einem metallischen Innenteil und einem zwischen beiden angeordneten Elastomerkörper, welcher axiale, radiale und kardanische Bewegungen des Gehäuses und des Innenteils relativ zueinander durch molekulare Verformung kompensiert, wobei der radial nach außen mit dem zylindrischen Innenmantel des Gehäuses zusammenwirkende Elastomerkörper auf dem Innenteil haftend angeordnet und axial zwischen Blechringen vorgespannt ist. Der Elastomerkörper weist im vormontierten, axial spannungsfreien Zustand mittig umlaufend eine ballige und beidseitig daneben eine umlaufend taillierte Mantelflächengeometrie auf, wobei die Blechringe im Außendurchmesser ein Untermaß gegenüber dem Innendurchmesser des Innenmantels des Gehäuses aufweisen und wobei eine unter der axialen Verspannung sich ergebende, mit der zylindrischen Innenmantelfläche des Gehäuses zusammenwirkende Gleitfläche am Umfang des Elastomerkörpers eine Drehbewegung des Innenteils im Gehäuse zulässt.

Ausgehend hiervon liegt der Erfindung die Aufgabe zugrunde, bei einem Gummilager der eingangs genannten Art eine große axiale Steifigkeit und eine große radiale Steifigkeit erzielen zu können. Bevorzugt soll dabei das Verhältnis von radialer Steifigkeit und axialer Steifigkeit gering gehalten werden können. Ferner soll das Gummilager insbesondere klein ausgebildet werden können. Vorteilhaft soll die radiale Steifigkeit in unterschiedlichen radialen Richtungen, insbesondere in zueinander senkrechten radialen Richtungen, unterschiedlich sein.

Diese Aufgabe wird erfindungsgemäß durch ein Gummilager nach Anspruch 1 gelöst. Bevorzugte Weiterbildungen der Erfindung sind in den Unteransprüchen und in der nachfolgenden Beschreibung gegeben.

Ein Gummilager mit einem sich in einer axialen Richtung erstreckenden und einen balligen Lagerbereich umfassenden Innenteil, einer das Innenteil umringenden Außenhülse und einem zwischen dem Innenteil und der Außenhülse angeordneten und das Innenteil umringenden Gummikörper, ist erfindungsgemäß insbesondere dadurch weitergebildet, dass der den Lagerbereich umringende Bereich der Außenhülse erhaben ausgebildet ist und rings des Lagerbereichs mehrere fensterartige Öffnungen aufweist.

Dadurch, dass der den Lagerbereich umringende Bereich der Außenhülse erhaben ausgebildet ist, kann dieser Bereich der Außenhülse sowohl axial als auch radial komprimiert werden, sodass auch der den Lagerbereich umringende Bereich des Gummikörpers sowohl axial als auch radial vorgespannt werden kann. Somit ist für das Gummilager sowohl eine große axiale Steifigkeit als auch eine große radiale Steifigkeit erzielbar. Insbesondere ist das Verhältnis von radialer Steifigkeit und axialer Steifigkeit durch die Größe und/oder die Anzahl der fensterartigen Öffnungen einstellbar. Somit kann z.B. das Verhältnis von radialer Steifigkeit und axialer Steifigkeit gering gehalten werden. Vorteilhaft ist durch die Lage der fensterartigen Öffnungen in Umfangsrichtung einstellbar, dass in unterschiedlichen radialen Richtungen unterschiedliche radiale Steifigkeiten vorliegen. Insbesondere weist das Gummilager relativ wenige Bauteile auf und kann somit kompakt und/oder klein ausgebildet werden.

Dem Gummilager und/oder dem Innenteil und/oder der Außenhülse ist bevorzugt eine in axialer Richtung verlaufende Lagerlängsachse zugeordnet. Bevorzugt erstreckt oder erstrecken sich das Gummilager und/oder das Innenteil und/oder die Außenhülse, vorzugsweise jeweils, in Richtung der Lagerlängsachse und/oder in axialer Richtung. Vorteilhaft verläuft die Lagerlängsachse mittig durch das Gummilager und/oder mittig durch das Innenteil und/oder mittig durch die Außenhülse. Bevorzugt ist oder sind das Gummilager und/oder das Innenteil und/oder die Außenhülse, vorzugsweise jeweils, bezüglich der Lagerlängsachse rotationssymmetrisch oder im Wesentlichen rotationssymmetrisch. Diese Symmetriebetrachtung erfolgt in Bezug auf das Gummilager und/oder die Außenhülse insbesondere unter Vernachlässigung der fensterartigen Öffnungen. Eine oder jedwede quer zur Lagerlängsachse und/oder quer zur axialen Richtung verlaufende Richtung wird vorzugsweise als radiale Richtung bezeichnet. Vorteilhaft wird eine um die Lagerlängsachse herum verlaufende Richtung als Umfangsrichtung bezeichnet.

Der Außenhülse ist bevorzugt eine Außenhülsenlängsachse zugeordnet, die insbesondere mittig durch die Außenhülse verläuft und sich vorzugsweise in oder näherungsweise in axialer Richtung erstreckt. Bevorzugt ist die Außenhülse bezüglich der Außenhülsenlängsachse rotationssymmetrisch oder im Wesentlichen rotationssymmetrisch. Diese Symmetriebetrachtung erfolgt insbesondere unter Vernachlässigung der fensterartigen Öffnungen. Vorteilhaft erstreckt sich die Außenhülse in Richtung der Außenhülsenlängsachse. Im unbelasteten Zustand des Gummilagers fällt die Außenhülsenlängsachse insbesondere mit der Lagerlängsachse zusammen. Im belasteten Zustand des Gummilagers kann die Außenhülsenlängsachse aber gegenüber der Lagerlängsachse geneigt und/oder versetzt sein. In Bezug auf die Außenhülse wird daher eine um eine Außenhülsenlängsachse herum verlaufende Richtung vorzugsweise als Umfangsrichtung bezeichnet.

Gemäß einer Ausgestaltung erstreckt sich der Gummikörper, vorzugsweise quer zur Lagerlängsachse und/oder quer zur axialen Richtung und/oder in radialer Richtung, von dem Innenteil bis zu der Außenhülse. Insbesondere umringt der Gummikörper das Innenteil zumindest im Lagerbereich. Bevorzugt ist der Gummikörper mit dem Innenteil, insbesondere durch Vulkanisation, festhaftend und/oder stoffschlüssig verbunden. Vorteilhaft ist der Gummikörper mit der Außenhülse, insbesondere durch Vulkanisation, festhaftend und/oder stoffschlüssig verbunden. Vorzugsweise ist der Gummikörper sowohl mit dem Innenteil als auch mit der Außenhülse, insbesondere durch Vulkanisation, festhaftend und/oder stoffschlüssig verbunden. Der Gummikörper besteht z.B. aus einem Elastomer und/oder aus Gummi. Beispielsweise erstreckt sich der Gummikörper bereichsweise oder in Bereichen in die fensterartigen Öffnungen hinein.

Gemäß einer Weiterbildung steht der Gummikörper, insbesondere in seinem den Lagerbereich umringenden Bereich, unter Vorspannung. Vorteilhaft steht der Gummikörper, insbesondere in seinem den Lagerbereich umringenden Bereich, unter radialer Vorspannung und/oder unter axialer Vorspannung. Die Vorspannung wird insbesondere durch, vorzugsweise axiales und/oder radiales, Kalibrieren der Außenhülse erzielt.

Gemäß einer Ausgestaltung ist der ballige Lagerbereich des Innenteils umlaufend. Bevorzugt ist der ballige Lagerbereich des Innenteils, insbesondere bezüglich der Lagerlängsachse, rotationssymmetrisch. Vorzugsweise ist der ballige Lagerbereich des Innenteils, insbesondere bezüglich einer quer zu der Lagerlängsachse verlaufenden Symmetrieebene, spiegelsymmetrisch.

Insbesondere ist der ballige Lagerbereich des Innenteils kugelförmig oder näherungsweise kugelförmig. Bevorzugt erstreckt sich in axialer Richtung durch das Innenteil eine Ausnehmung hindurch, die insbesondere ein Montageloch ist oder bildet. Vorzugsweise ist oder bildet das Innenteil eine Hülse. Beispielsweise wird das Innenteil auch als Innenhülse bezeichnet. Vorteilhaft besteht das Innenteil aus Metall. Beispielsweise besteht das Innenteil aus Aluminium, aus Magnesium oder aus einem Eisenwerkstoff, wie z.B. Stahl.

Das Innenteil weist bevorzugt zwei halsförmige Abschnitte auf, zwischen denen der Lagerbereich axial angeordnet ist. Insbesondere geht der Lagerbereich, vorzugsweise axial beidseitig, in die halsförmigen Abschnitte über. Vorteilhaft weisen die halsförmigen Abschnitte einen kleineren Außendurchmesser als der Lagerbereich auf. Vorzugsweise weisen die halsförmigen Abschnitte einen axialen Abstand zueinander auf.

Gemäß einer Weiterbildung ist das Innenteil an seinen axialen Enden aufgeweitet. Bevorzugt weist das Innenteil zwischen seinen axialen Enden und dem Lagerbereich jeweils einen der halsförmigen Abschnitte oder einen halsförmigen Abschnitt auf, gegenüber welchem das jeweilige axiale Ende aufgeweitet ist. Somit sind die axialen Stirnflächen des Innenteils, die insbesondere Anlageflächen bilden, vergrößert oder vergrößerbar, sodass z.B. das Gummilager im Außendurchmesser klein oder kleiner ausbildbar ist. Das Aufweiten der axialen Enden des Innenteils erfolgt vorzugsweise durch Taumeln.

Gemäß einer Ausgestaltung ist der erhabene Bereich der Außenhülse, insbesondere bezüglich der Lagerlängsachse und/oder bezüglich der Außenhülsenlängsachse, umlaufend. Vorteilhaft ist der erhabene Bereich der Außenhülse, insbesondere bezüglich der Lagerlängsachse und/oder bezüglich der Außenhülsenlängsachse, rotationssymmetrisch oder im Wesentlichen rotationssymmetrisch. Diese Symmetriebetrachtung erfolgt insbesondere unter Vernachlässigung der fensterartigen Öffnungen. Vorzugsweise ist der erhabene Bereich, insbesondere bezüglich der oder einer quer zur Lagerlängsachse und/oder quer zur Außenhülsenlängsachse verlaufenden Symmetrieebene, spiegelsymmetrisch. Vorteilhaft besteht die Außenhülse aus Metall. Beispielsweise besteht die Außenhülse aus Aluminium, aus Magnesium oder aus einem Eisenwerkstoff, wie z.B. Stahl. Der erhabene Bereich ist insbesondere nach radial außen erhaben. Bevorzugt steht der erhabene Bereich, insbesondere gegenüber benachbarten oder unmittelbar benachbarten Bereichen der Außenhülse, zwischen denen der erhabene Bereich axial angeordnet ist, nach radial außen vor oder hervor. Vorzugsweise sind die fensterartigen Öffnungen im erhabenen Bereich vorgesehen.

Erfindungsgemäß weist der erhabene Bereich der Außenhülse zwei, insbesondere ringförmige, Randabschnitte und einen, insbesondere ringförmigen, Mittelabschnitt auf, der in axialer Richtung zwischen den Randabschnitten angeordnet ist und in jeden der Randabschnitte, vorzugsweise axial, übergeht. Die Randabschnitte sind in axialer Richtung bevorzugt im Abstand zueinander angeordnet. Erfindungsgemäß verjüngen sich die Randabschnitte mit zunehmendem axialem Abstand zu dem Mittelabschnitt. Bevorzugt ist der Mittelabschnitt, insbesondere in axialer Richtung, zylindrisch ausgebildet. Vorzugsweise weist der erhabene Bereich der Außenhülse, insbesondere mittig oder axial mittig, einen in axialer Richtung verlaufenden, zylindrischen Abschnitt auf. Bevorzugt verjüngt sich der erhabene Bereich axial beidseitig des zylindrischen Abschnitts mit zunehmendem axialem Abstand zu dem zylindrischen Abschnitt. Mit dem Mittelabschnitt und/oder mit dem zylindrischen Abschnitt des erhabenen Bereichs kann die Außenhülse z.B. in eine, insbesondere zylindrische, Aufnahmeausnehmung eingebracht und/oder eingepresst werden, die vorzugsweise in einem Bauteil oder Fahrzeugbauteil vorgesehen ist. Ferner kann an dem Mittelabschnitt und/oder an dem zylindrischen Abschnitt z.B. ein Kalibrierwerkzeug zum radialen Komprimieren der Außenhülse angreifen. An den Randabschnitten und/oder an den sich verjüngenden Abschnitten des erhabenen Bereichs kann z.B. das oder ein Kalibrierwerkzeug zum axialen Komprimieren der Außenhülse angreifen. Die fensterartigen Öffnungen sind erfindungsgemäß im Mittelabschnitt und/oder im zylindrischen Abschnitt vorgesehen.

Gemäß einer Ausgestaltung erstrecken sich die fensterartigen Öffnungen jeweils, insbesondere in radialer Richtung oder in einer radialen Richtung, durch die oder eine Wandung der Außenhülse hindurch. Bevorzugt bilden die fensterartigen Öffnungen, insbesondere in der Wandung der Außenhülse vorgesehene, Durchbrüche. Die fensterartigen Öffnungen werden z.B. auch als Durchbrüche oder als fensterartige Durchbrüche bezeichnet. Erfindungsgemäß weist jede der fensterartigen Öffnungen eine geschlossene Umfangskontur oder Innenumfangskontur auf. Vorteilhaft ist jede der fensterartigen Öffnungen viereckig, rechteckig oder quadratisch ausgebildet.

Gemäß einer Weiterbildung beträgt die Anzahl der fensterartigen Öffnungen zwei, wenigstens zwei oder vier oder wenigstens vier. Bevorzugt ist die Anzahl der fensterartigen Öffnungen eine gerade Zahl. Somit ist es insbesondere möglich, die fensterartigen Öffnungen oder jeweils zwei der fensterartigen Öffnungen bezüglich der Lagerlängsachse und/oder der Außenhülsenlängsachse einander gegenüberliegend anzuordnen.

Gemäß einer Ausgestaltung sind die fensterartigen Öffnungen rings des Lagerbereichs gleichmäßig verteilt angeordnet. Bei mehr als zwei fensterartigen Öffnungen, vorzugsweise bei vier fensterartigen Öffnungen, ist hierdurch insbesondere eine hohe Symmetrie erzielbar. Bei zwei fensterartigen Öffnungen liegen diese bevorzugt bezüglich der Lagerlängsachse und/oder der Außenhülsenlängsachse einander, vorzugsweise diametral, gegenüber und/oder sind in Umfangsrichtung insbesondere um 180° zueinander versetzt.

Gemäß einer Weiterbildung liegen die oder jeweils zwei der fensterartigen Öffnungen bezüglich der Lagerlängsachse und/oder der Außenhülsenlängsachse einander, insbesondere diametral, gegenüber. Bevorzugt bilden die oder zwei der einander gegenüberliegenden fensterartigen Öffnungen jeweils ein Fensterpaar. Vorteilhaft sind die Fensterpaare bezüglich der Lagerlängsachse und/oder der Außenhülsenlängsachse um 90° zueinander versetzt. Vorzugsweise umfasst die Außenhülse ein oder wenigstens ein Fensterpaar oder zwei oder wenigstens zwei Fensterpaare.

Gemäß einer Ausgestaltung weisen die fensterartigen Öffnungen oder mehrere der fensterartigen Öffnungen gleiche geometrische Abmessungen auf. Alternativ weisen die fensterartigen Öffnungen oder mehrere der fensterartigen Öffnungen unterschiedliche geometrische Abmessungen auf. Durch die geometrische Abmessung jeder fensterartigen Öffnung ist insbesondere die radiale Steifigkeit im Bereich dieser fensterartigen Öffnung gezielt einstellbar.

Gemäß einer Weiterbildung sind in die Außenumfangsfläche des Gummikörpers mehrere taschenförmige Ausnehmungen eingebracht, die sich vorzugsweise jeweils an eine der fensterartigen Öffnungen anschließen. Insbesondere ist das Verhältnis von radialer Steifigkeit und axialer Steifigkeit zusätzlich durch die Anzahl und/oder die Geometrie der taschenförmigen Ausnehmungen einstellbar. Auch hierdurch kann z.B. das Verhältnis von radialer Steifigkeit und axialer Steifigkeit gering gehalten werden. Vorteilhaft ist durch die Lage der taschenförmigen Ausnehmungen in Umfangsrichtung, insbesondere zusätzlich, einstellbar, dass in unterschiedlichen radialen Richtungen unterschiedliche radiale Steifigkeiten vorliegen.

Bevorzugt ist jede taschenförmige Ausnehmung am Außenumfang des Gummikörpers und/oder zu der Außenhülse hin offen. Vorteilhaft weist jede taschenförmige Ausnehmung am Außenumfang des Gummikörpers eine Öffnung auf, die z.B. auch als Taschenöffnung bezeichnet wird. Insbesondere geht die Öffnung oder Taschenöffnung jeder taschenförmigen Ausnehmung in die jeweilige fensterartige Öffnung über. Bevorzugt erstrecken sich die taschenförmigen Ausnehmungen, vorzugsweise jeweils, in radialer Richtung oder in einer radialen Richtung.

Gemäß einer Ausgestaltung weist jede der taschenförmigen Ausnehmungen eine geschlossene Innenumfangskontur auf. Vorteilhaft weist jede der taschenförmigen Ausnehmungen eine viereckige, rechteckige oder quadratische Innenumfangskontur auf. Beispielsweise verjüngt sich die Innenumfangskontur jeder taschenförmigen Ausnehmung mit abnehmendem Abstand zum Innenteil und/oder mit zunehmendem Abstand zu der jeweiligen fensterartigen Öffnung. Vorteilhaft endet jede taschenförmige Ausnehmung im Abstand zum oder am Innenteil und/oder innerhalb des Gummikörpers im Abstand zum oder am Innenteil. Beispielsweise endet jede taschenförmige Ausnehmung innerhalb des Gummikörpers. Bevorzugt weist jede taschenförmige Ausnehmung einen, insbesondere gekrümmten und/oder konkaven, Boden oder Taschenboden auf, der vorzugsweise der jeweiligen Taschenöffnung, insbesondere radial, gegenüberliegt.

Gemäß einer Weiterbildung beträgt die Anzahl der taschenförmigen Ausnehmungen zwei, wenigstens zwei oder vier oder wenigstens vier. Bevorzugt ist die Anzahl der taschenförmigen Ausnehmungen eine gerade Zahl. Somit ist es insbesondere möglich, die taschenförmigen Ausnehmungen oder jeweils zwei der taschenförmigen Ausnehmungen bezüglich der Lagerlängsachse einander gegenüberliegend anzuordnen. Die Anzahl der fensterartigen Öffnungen entspricht insbesondere der Anzahl der taschenförmigen Ausnehmungen oder ist größer als die Anzahl der taschenförmigen Ausnehmungen.

Gemäß einer Ausgestaltung sind die taschenförmigen Ausnehmungen rings des Lagerbereichs gleichmäßig verteilt angeordnet. Bei mehr als zwei taschenförmigen Ausnehmungen, vorzugsweise bei vier taschenförmigen Ausnehmungen, ist hierdurch insbesondere eine hohe Symmetrie erzielbar. Bei zwei taschenförmigen Ausnehmungen liegen diese bevorzugt bezüglich der Lagerlängsachse einander, vorzugsweise diametral, gegenüber und/oder sind in Umfangsrichtung insbesondere um 180° zueinander versetzt.

Gemäß einer Weiterbildung liegen die oder jeweils zwei der taschenförmigen Ausnehmungen bezüglich der Lagerlängsachse einander, insbesondere diametral, gegenüber. Bevorzugt bilden die oder zwei der einander gegenüberliegenden taschenförmigen Ausnehmungen jeweils ein Taschenpaar. Vorteilhaft sind die Taschenpaare bezüglich der Lagerlängsachse um 90° zueinander versetzt. Vorzugsweise umfasst der Gummikörper ein oder wenigstens ein Taschenpaar oder zwei oder wenigstens zwei Taschenpaare.

Gemäß einer Weiterbildung weisen die taschenförmigen Ausnehmungen oder mehrere der taschenförmigen Ausnehmungen gleiche geometrische Abmessungen auf. Alternativ weisen die taschenförmigen Ausnehmungen oder mehrere der taschenförmigen Ausnehmungen z.B. unterschiedliche geometrische Abmessungen auf. Durch die geometrische Abmessung jeder taschenförmigen Ausnehmung ist insbesondere die radiale Steifigkeit im Bereich dieser taschenförmigen Ausnehmung gezielt einstellbar.

Gemäß einer Weiterbildung ist die Öffnung oder Taschenöffnung jeder taschenförmigen Ausnehmung mit der jeweiligen fensterartigen Öffnung deckungsgleich oder im Wesentlichen deckungsgleich. Alternativ ist die Öffnung oder Taschenöffnung jeder taschenförmigen Ausnehmung kleiner oder größer als die jeweilige fensterartige Öffnung. Vorzugsweise ist die Öffnung oder Taschenöffnung jeder taschenförmigen Ausnehmung aber deckungsgleich mit oder kleiner als die jeweilige fensterartige Öffnung. Somit kann z.B. durch die oder mehrere der fensterartigen Öffnungen jeweils ein Vorsprung des zur Herstellung des Gummikörpers eingesetzten Spritzgusswerkzeugs zum Ausbilden der taschenförmigen Ausnehmungen hindurchgreifen. Bevorzugt ist der Innenumfang jeder fensterartigen Öffnung, insbesondere zumindest bereichsweise, mit einer Gummihaut des Gummikörpers bedeckt.

Gemäß einer Ausgestaltung sind die fensterartigen Öffnungen oder mehrere, vorzugsweise zwei oder wenigstens zwei oder vier oder wenigstens vier, der fensterartigen Öffnungen, insbesondere am oder zumindest am Innenumfang der Außenhülse, durch den Gummikörper verschlossen oder abgedeckt. Beispielsweise erstreckt sich der Gummikörper in die so verschlossenen oder abgedeckten fensterartigen Öffnungen hinein. Auch hierdurch lassen sich in unterschiedlichen radialen Richtungen unterschiedliche radiale Steifigkeiten einstellen. Ergänzend oder alternativ sind z.B. mehrere, vorzugsweise zwei oder wenigstens zwei oder vier oder wenigstens vier, der taschenförmigen Ausnehmungen mit Gummi oder Elastomer verfüllt. Hierdurch sind die sich an diese verfüllten taschenförmigen Ausnehmungen anschließenden fensterartigen Öffnungen beispielsweise verschlossen.

Das Gummilager ist insbesondere für ein Fahrzeug vorgesehen und/oder in das oder ein Fahrzeug eingebaut oder einbaubar. Bevorzugt ist das Innenteil mit einem ersten Fahrzeugbauteil und die Außenhülse mit einem zweiten Fahrzeugbauteil verbunden oder verbindbar. Vorteilhaft erstreckt sich durch die in dem Innenteil vorgesehene Ausnehmung und/oder durch das Montageloch ein Befestigungsmittel hindurch, mittels welchem das Innenteil mit dem ersten Fahrzeugbauteil verbunden oder verbindbar sind. Das Befestigungsmittel ist z.B. ein Bolzen. Bevorzugt weist das zweite Fahrzeugbauteil eine, vorzugsweise zylindrische, Aufnahmeausnehmung auf, in welche das Gummilager mit seiner Außenhülse eingesetzt oder einsetzbar, vorzugsweise eingepresst oder einpressbar, ist. Bei den Fahrzeugbauteilen handelt es sich beispielsweise um Fahrwerkbauteile. Das erste Fahrzeugbauteil ist z.B. ein Fahrwerklenker, und das zweite Fahrzeugbauteil ist z.B. ein Hilfsrahmen oder ein Fahrschemel oder ein Achsträger oder ein Fahrzeugaufbau oder ein Radträger oder Achsschenkel. Alternativ ist das zweite Fahrzeugbauteil z.B. ein Fahrwerklenker, und das erste Fahrzeugbauteil ist z.B. ein Hilfsrahmen oder ein Fahrschemel oder ein Achsträger oder ein Fahrzeugaufbau oder ein Radträger oder Achsschenkel.

Gemäß einer Ausgestaltung umfasst das Gummilager das Innenteil mit dem balligen oder kugelförmigen Lagerbereich, den Gummikörper und die Außenhülse mit den fensterartigen Öffnungen, welche mit dem Gummikörper, insbesondere durch Vulkanisation, festhaftend verbunden ist oder wird. Nach diesem Verbinden und/oder nach der Vulkanisation wird die Außenhülse bevorzugt radial und axial kalibriert. Durch das Vorsehen der fensterartigen Öffnungen in der Außenhülse und/oder durch unterschiedliche, insbesondere radiale, Geometrien oder Gummi-Geometrien in den taschenförmigen Ausnehmungen ist nach dem Kalibrierprozess, das heißt insbesondere nach der Reduzierung oder Umformung des Außendurchmessers, bevorzugt eine unterschiedlich hohe radiale und axiale Steifigkeit im Gummilager vorhanden. Ferner ist die kardanische Steifigkeit durch den Einsatz des balligen oder kugelförmigen Lagerbereichs vorzugsweise gering. Der Vorteil ist insbesondere das geringe einstellbare Verhältnis zwischen radialer und axialer Steifigkeit durch den Einsatz von wenigen Einzelteilen, wodurch Kostenvorteile entstehen. Ein weiterer Vorteil ist die kompakte Bauweise durch das, insbesondere starke, Kalibrieren der Außenhülse, was vorzugsweise zu einer Erhöhung der Lebensdauer des Gummilagers führt. Durch die bevorzugte Möglichkeit, das Innenteil an den Enden taumeln zu können, ist ferner eine Vergrößerung der Anlagefläche des Innenteiles möglich, wodurch das Gummilager im Außendurchmesser insbesondere kleiner ausgeführt werden kann.

Die Erfindung wird nachfolgend anhand bevorzugter Ausführungsformen unter Bezugnahme auf die Zeichnung beschrieben. In der Zeichnung zeigen:
Fig. 1 eine perspektivische Ansicht eines Gummilagers gemäß einer ersten Ausführungsform,
Fig. 2 eine Draufsicht auf das Gummilager nach Fig. 1,
Fig. 3 einen Längsschnitt durch das Gummilager gemäß der ersten Ausführungsform entlang der aus Fig. 2 ersichtlichen Schnittlinie A-A,
Fig. 4 einen anderen Längsschnitt durch das Gummilager gemäß der ersten Ausführungsform im eingebauten Zustand des Gummilagers,
Fig. 5 eine perspektivische Ansicht eines Gummilagers gemäß einer zweiten Ausführungsform,
Fig. 6 eine Draufsicht auf das Gummilager nach Fig. 5 und
Fig. 7 einen Längsschnitt durch das Gummilager gemäß der zweiten Ausführungsform entlang der aus Fig. 6 ersichtlichen Schnittlinie B-B.

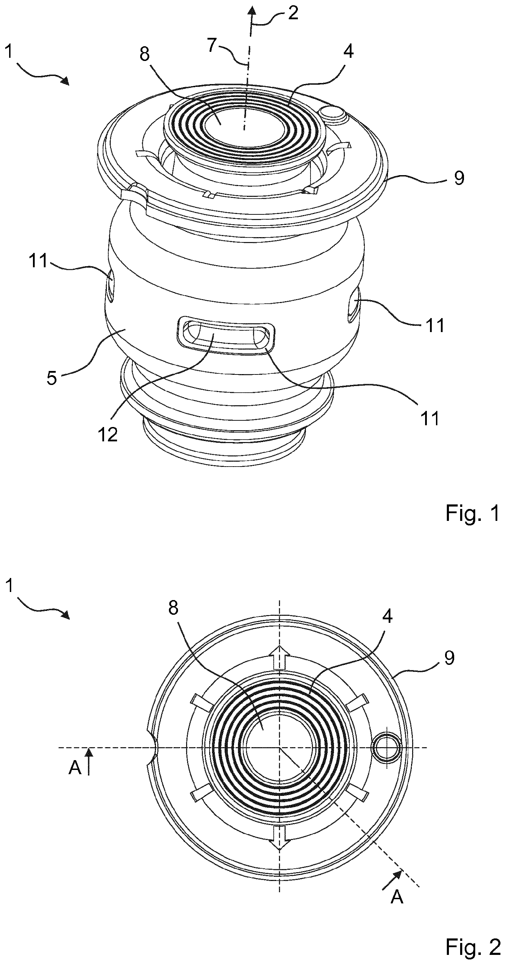

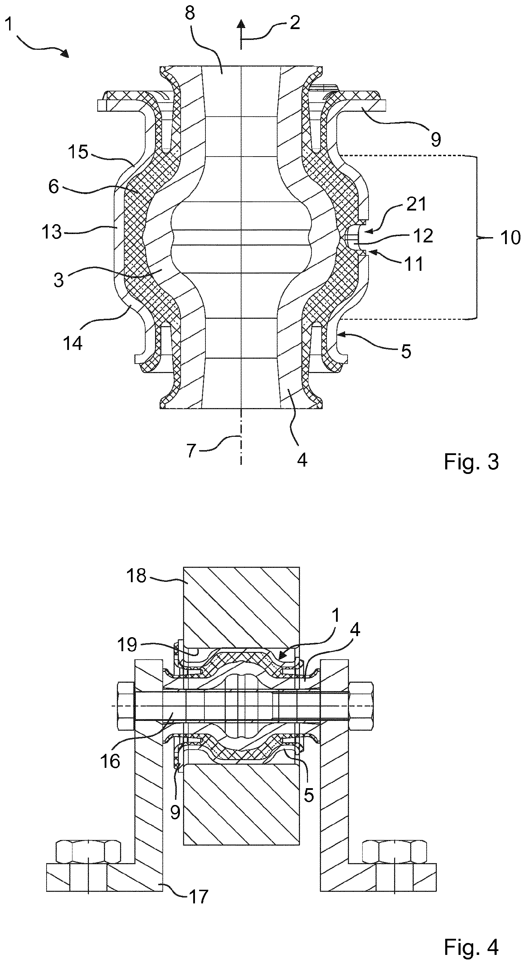

Aus den Fig. 1 bis 3 sind unterschiedliche Ansichten eines Gummilagers 1 gemäß einer ersten Ausführungsform ersichtlich, wobei Fig. 1 eine perspektivische Ansicht des Gummilagers 1, Fig. 2 eine Draufsicht auf das Gummilager 1 und Fig. 3 einen Längsschnitt des Gummilagers 1 entlang der aus Fig. 2 ersichtlichen Schnittlinie A-A zeigt. Das Gummilager 1 umfasst ein sich in einer axialen Richtung 2 erstreckendes und einen balligen Lagerbereich 3 umfassendes Innenteil 4, welches an seinen axialen Endbereichen insbesondere aufgeweitet ist, eine das Innenteil 4 umringende Außenhülse 5 und einen zwischen dem Innenteil 4 und der Außenhülse 5 angeordneten und das Innenteil 4 umringenden Gummikörper 6. Der Gummikörper 6 ist sowohl mit dem Innenteil 4 als auch mit der Außenhülse 5, insbesondere durch Vulkanisation, festhaftend verbunden. Ferner ist dem Gummilager 1 eine sich in axialer Richtung 2 erstreckende Lagerlängsachse 7 zugeordnet, bezüglich welcher das Innenteil 4 rotationssymmetrisch ist. Durch das Innenteil 4 erstreckt sich in axialer Richtung ein Montagloch 8 in Form einer durchgehenden Ausnehmung hindurch, sodass dass das Innenteil 4 als Hülse ausgebildet ist. Ferner ist an einem axialen Ende der Außenhülse 5 ein ringförmiger Flansch 9 vorgesehen, der hier insbesondere durch einen nach radial außen umgeformten axialen Endbereich der Außenhülse 5 gebildet ist. Der Außenhülse 5 ist vorzugsweise eine Außenhülsenlängsachse zugeordnet, die hier aber mit der Lagerlängsachse 7 zusammenfällt, da das Gummilager 1 in der Zeichnung in einem unbelasteten Zustand dargestellt ist.

Der den Lagerbereich 3 umringende Bereich 10 der Außenhülse 5 ist erhaben ausgebildet und weist rings des Lagerbereichs 3 mehrere, insbesondere vier, fensterartige Öffnungen 11 auf, die sich durch die Wandung der Außenhülse 5 hindurch erstrecken. Ferner sind in die Außenumfangsfläche des Gummikörpers 6 mehrere, insbesondere vier, taschenförmige Ausnehmungen 12 eingebracht, die sich jeweils an eine der fensterartigen Öffnungen 11 anschließen und sich radial in den Gummikörper 6 hinein erstrecken. Insbesondere gehen die Öffnungen 21 der taschenförmigen Ausnehmungen 12 in die fensterartigen Öffnungen 11 über. Durch die fensterartigen Öffnungen 11 und die taschenförmigen Ausnehmungen 12 ist die radiale Steifigkeit des Gummilagers 1 lokal herabgesetzt.

Der erhabene Bereich 10 der Außenhülse 5 weist einen in axialer Richtung 2 verlaufenden, zylindrischen Abschnitt 13 auf und verjüngt sich axial beidseitig dieses zylindrischen Abschnitts 13 mit zunehmendem axialem Abstand zu dem zylindrischen Abschnitt 13. Die sich verjüngenden Abschnitte 14 und 15 des erhabenen Bereichs 10 bilden dabei Randabschnitte des erhabenen Bereichs 10. Ferner bildet der zylindrische Abschnitt 13 einen in axialer Richtung 2 zwischen den Randabschnitten 14 und 15 angeordneten Mittelabschnitt des erhabenen Bereichs 10. Die fensterartigen Öffnungen 11 sind im zylindrischen Abschnitt 13 vorgesehen.

Die Außenhülse 5 wurde, insbesondere im erhabenen Bereich 10, radial kalibriert, d.h. im Durchmesser verringert, sodass der Gummikörper 6, insbesondere in seinem dem Lagerbereich 3 umringenden Bereich, unter radialer Vorspannung steht. Ferner wurde die Außenhülse 5, insbesondere im erhabenen Bereich 10, axial kalibriert, d.h. der axiale Abstand zwischen den Radbereichen 14 und 15 wurde verringert, sodass der Gummikörper 6, insbesondere in seinem dem Lagerbereich 3 umringenden Bereich, zusätzlich unter axialer Vorspannung steht.

Aus Fig. 4 ist ein anderer Längsschnitt durch das Gummilager 1 im eingebauten Zustand des Gummilagers 1 ersichtlich. Dabei erstreckt sich durch das Montageloch 8 des Innenteils 4 ein Befestigungsmittel 16 in Form eines Bolzens hindurch, mittels welchem das Innenteil 4 mit einem ersten Fahrzeugbauteil 17 verbunden ist. Ferner ist die Außenhülse 5 in eine in einem zweiten Fahrzeugbauteil 18 vorgesehene, zylindrische Aufnahmeausnehmung 19 eingepresst und somit mit dem zweiten Fahrzeugbauteil 18 verbunden. Dabei liegt der Flansch 9 der Außenhülse 5 axial an dem zweiten Fahrzeugbauteil 18 an. Ferner liegt das Innenteil 4 mit seinen, insbesondere aufgeweiteten, axialen Endbereichen axial an dem ersten Fahrzeugbauteil 17 an.

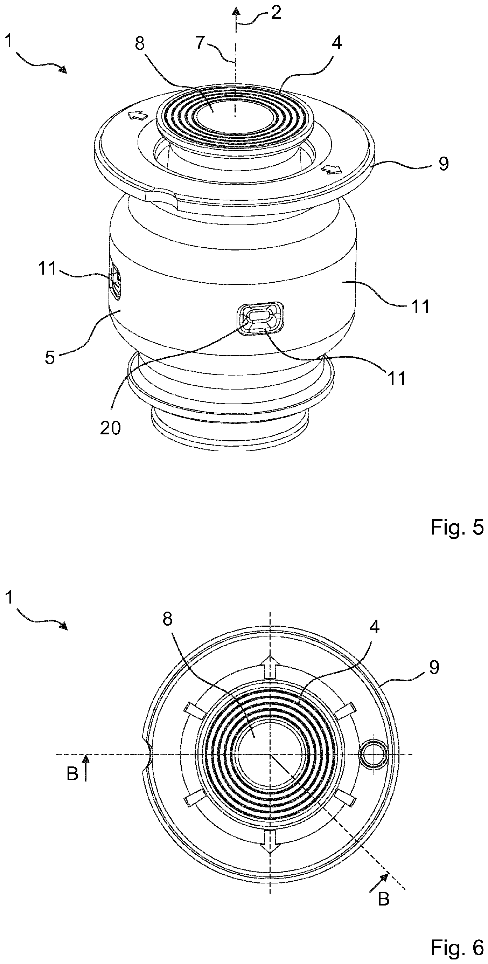

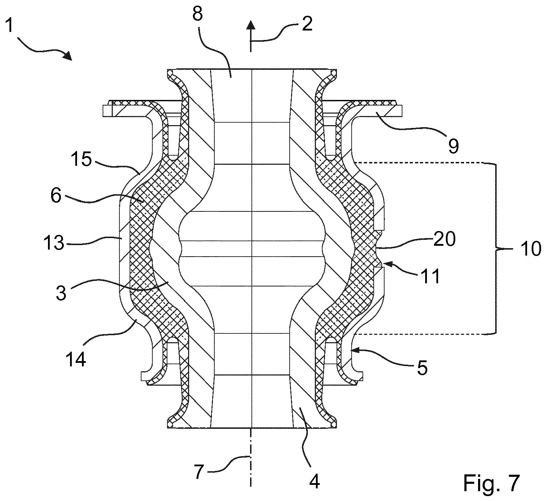

Aus den Fig. 5 bis 7 sind unterschiedliche Ansichten eines Gummilagers 1 gemäß einer zweiten Ausführungsform ersichtlich, wobei Fig. 5 eine perspektivische Ansicht des Gummilagers 1, Fig. 6 eine Draufsicht auf das Gummilager 1 und Fig. 7 einen Längsschnitt des Gummilagers 1 entlang der aus Fig. 6 ersichtlichen Schnittlinie B-B zeigt. Das Gummilager 1 umfasst ein sich in einer axialen Richtung 2 erstreckendes und einen balligen Lagerbereich 3 umfassendes Innenteil 4, welches an seinen axialen Endbereichen insbesondere aufgeweitet ist, eine das Innenteil 4 umringende Außenhülse 5 und einen zwischen dem Innenteil 4 und der Außenhülse 5 angeordneten und das Innenteil 4 umringenden Gummikörper 6. Der Gummikörper 6 ist sowohl mit dem Innenteil 4 als auch mit der Außenhülse 5, insbesondere durch Vulkanisation, festhaftend verbunden. Ferner ist dem Gummilager 1 eine sich in axialer Richtung 2 erstreckende Lagerlängsachse 7 zugeordnet, bezüglich welcher das Innenteil 4 rotationssymmetrisch ist. Durch das Innenteil 4 erstreckt sich in axialer Richtung ein Montagloch 8 in Form einer durchgehenden Ausnehmung hindurch, sodass dass das Innenteil 4 als Hülse ausgebildet ist. Ferner ist an einem axialen Ende der Außenhülse 5 ein ringförmiger Flansch 9 vorgesehen, der hier insbesondere durch einen nach radial außen umgeformten axialen Endbereich der Außenhülse 5 gebildet ist. Der Außenhülse 5 ist vorzugsweise eine Außenhülsenlängsachse zugeordnet, die hier aber mit der Lagerlängsachse 7 zusammenfällt, da das Gummilager 1 in der Zeichnung in einem unbelasteten Zustand dargestellt ist.

Der den Lagerbereich 3 umringende Bereich 10 der Außenhülse 5 ist erhaben ausgebildet und weist rings des Lagerbereichs 3 mehrere, insbesondere vier, fensterartige Öffnungen 11 auf, die sich durch die Wandung der Außenhülse 5 hindurch erstrecken. Insbesondere erstreckt sich der Gummikörper 6 in Bereichen 20 in die fensterartigen Öffnungen 11 hinein. Durch die fensterartigen Öffnungen 11 ist die radiale Steifigkeit des Gummilagers 1 lokal herabgesetzt.

Der erhabene Bereich 10 der Außenhülse 5 weist einen in axialer Richtung 2 verlaufenden, zylindrischen Abschnitt 13 auf und verjüngt sich axial beidseitig dieses zylindrischen Abschnitts 13 mit zunehmendem axialem Abstand zu dem zylindrischen Abschnitt 13. Die sich verjüngenden Abschnitte 14 und 15 des erhabenen Bereichs 10 bilden dabei Randabschnitte des erhabenen Bereichs 10. Ferner bildet der zylindrische Abschnitt 13 einen in axialer Richtung 2 zwischen den Randabschnitten 14 und 15 angeordneten Mittelabschnitt des erhabenen Bereichs 10. Die fensterartigen Öffnungen 11 sind im zylindrischen Abschnitt 13 vorgesehen.

Die Außenhülse 5 wurde, insbesondere im erhabenen Bereich 10, radial kalibriert, d.h. im Durchmesser verringert, sodass der Gummikörper 6, insbesondere in seinem dem Lagerbereich 3 umringenden Bereich, unter radialer Vorspannung steht. Ferner wurde die Außenhülse 5, insbesondere im erhabenen Bereich 10, axial kalibriert, d.h. der axiale Abstand zwischen den Radbereichen 14 und 15 wurde verringert, sodass der Gummikörper 6, insbesondere in seinem dem Lagerbereich 3 umringenden Bereich, zusätzlich unter axialer Vorspannung steht.

Das Gummilager gemäß der zweiten Ausführungsform kann auf die gleiche Weise wie das Gummilager gemäß der ersten Ausführungsform mit Fahrzeugbauteilen, insbesondere mit den Fahrzeugbauteilen 17 und 18 gemäß Fig. 4, verbunden sein oder werden.

Ferner ist es in Analogie zur ersten Ausführungsform bei einer Abwandlung des Gummilagers gemäß der zweiten Ausführungsform möglich, im Bereich von mehreren, vorzugsweise von zwei, der fensterartigen Öffnungen 11 in dem Gummikörper 6 taschenförmige Ausnehmungen vorzusehen, die sich an diese mehreren, vorzugsweise beiden, fensterartigen Öffnungen 11 anschließen. Somit ist insbesondere eine Mischform der beiden Ausführungsformen geschaffen.

### Bezugszeichenliste

- 1: Gummilager
- 2: axiale Richtung
- 3: Lagerbereich des Innenteils
- 4: Innenteil
- 5: Außenhülse
- 6: Gummikörper
- 7: Lagerlängsachse
- 8: Montageloch im Innenteil
- 9: Flansch der Außenhülse
- 10: erhabener Bereich der Außenhülse
- 11: fensterartige Öffnung
- 12: taschenförmige Ausnehmung
- 13: zylindrischer Abschnitt des erhabenen Bereichs
- 14: Randabschnitt des erhabenen Bereichs
- 15: Randabschnitt des erhabenen Bereichs
- 16: Befestigungsmittel
- 17: erstes Fahrzeugbauteil
- 18: zweites Fahrzeugbauteil
- 19: Aufnahmeausnehmung im zweiten Fahrzeugbauteil
- 20: Bereich des Gummikörpers
- 21: Öffnung der taschenförmigen Ausnehmung

## Patentansprüche

1. Gummilager mit einem sich in einer axialen Richtung (2) erstreckenden und einen balligen Lagerbereich (3) umfassenden Innenteil (4), einer das Innenteil (4) umringenden Außenhülse (5) und einem zwischen dem Innenteil (4) und der Außenhülse (5) angeordneten und das Innenteil (4) umringenden Gummikörper (6), wobei der den Lagerbereich (3) umringende Bereich (10) der Außenhülse (5) erhaben ausgebildet ist und mehrere fensterartige Öffnungen (11) aufweist, die jeweils eine geschlossene Umfangskontur aufweisen, wobei der erhabene Bereich (10) der Außenhülse (5) zwei Randabschnitte (14, 15) und einen Mittelabschnitt (13) aufweist, der in axialer Richtung (2) zwischen den Randabschnitten (14, 15) angeordnet ist und in jeden der Randabschnitte (14, 15) übergeht, die sich mit zunehmendem axialem Abstand zu dem Mittelabschnitt (13) verjüngen, in dem die fensterartigen Öffnungen (11) vorgesehen sind, **dadurch gekennzeichnet, dass** die fensterartigen Öffnungen rings des Lagerbereichs (3) angeordnet sind.

2. Gummilager nach Anspruch 1, **dadurch gekennzeichnet, dass** die Anzahl der fensterartigen Öffnungen (11) zwei, wenigstens zwei oder vier oder wenigstens vier beträgt.

3. Gummilager nach Anspruch 1 oder 2, **dadurch gekennzeichnet, dass** die fensterartigen Öffnungen (11) rings des Lagerbereichs (3) gleichmäßig verteilt angeordnet sind.

4. Gummilager nach einem der vorangehenden Ansprüche, **dadurch gekennzeichnet, dass** die fensterartigen Öffnungen (11) gleiche geometrische Abmessungen aufweisen.

5. Gummilager nach einem der vorangehenden Ansprüche, **dadurch gekennzeichnet, dass** in die Außenumfangsfläche des Gummikörpers (6) mehrere taschenförmige Ausnehmungen (12) eingebracht sind, die sich jeweils an eine der fensterartigen Öffnungen (11) anschließen.

6. Gummilager nach Anspruch 5, **dadurch gekennzeichnet, dass** die Anzahl der fensterartigen Öffnungen (11) der Anzahl der taschenförmigen Ausnehmungen (12) entspricht oder größer als die Anzahl der taschenförmigen Ausnehmungen (12) ist.

7. Gummilager nach Anspruch 5 oder 6, **dadurch gekennzeichnet, dass** die taschenförmigen Ausnehmungen (12) gleiche geometrische Abmessungen aufweisen.

8. Gummilager nach einem der Ansprüche 5 bis 7, **dadurch gekennzeichnet, dass** die Öffnung (21) jeder taschenförmigen Ausnehmung (12) deckungsgleich mit oder kleiner als die jeweilige fensterartige Öffnung (11) ist.

9. Gummilager nach einem der vorangehenden Ansprüche, **dadurch gekennzeichnet, dass** der Mittelabschnitt (13) zylindrisch ausgebildet ist.

10. Gummilager nach einem der vorangehenden Ansprüche, **dadurch gekennzeichnet, dass** das Innenteil (4) an seinen axialen Enden aufgeweitet ist.

11. Gummilager nach einem der vorangehenden Ansprüche, **dadurch gekennzeichnet, dass** sich der Gummikörper (6) von dem Innenteil (4) bis zu der Außenhülse (5) erstreckt und sowohl mit dem Innenteil (4) als auch mit der Außenhülse (5) festhaftend verbunden ist.

## Claims

1. Rubber bearing with an inner part (4) extending in an axial direction (2) and comprising a spherical bearing area (3), an outer sleeve (5) surrounding the inner part (4) and the rubber body (6) arranged on the outer sleeve (5) and surrounding the inner part (4), wherein the area (10) of the outer sleeve (5) surrounding the bearing area (3) is designed to be raised and has several window-like openings (11) which each have a closed perimeter, wherein the raised area (10) of the outer sleeve (5) has two edge sections (14, 15) and a central section (13) which is arranged between the edge sections (14, 15) in an axial direction (2) and passes into each of the edge sections (14, 15) which taper with increasing axial distance from the central section (13) in which the window-like openings (11) are provided, **characterised in that** the window-like openings are arranged all around the bearing area (3).

2. Rubber bearing according to claim 1, **characterised in that** the number of window-like openings (11) is two, at least two or four or at least four.

3. Rubber bearing according to either claim 1 or 2, **characterised in that** the window-like openings (11) are arranged in an evenly distributed manner all around the bearing area (3).

4. Rubber bearing according to any one of the preceding claims, **characterised in that** the window-like openings (11) have like geometric dimension.

5. Rubber bearing according to any one of the preceding claims, **characterised in that** several pocket-shaped recesses (12) are introduced into the external circumference of the rubber body (6), which recesses each connect to one of the window-like openings (11).

6. Rubber bearing according to claim 5, **characterised in that** the number of window-like openings (11) corresponds to the number of pocket-shaped recesses (12) or is greater than the number of pocket-shaped recesses (12).

7. Rubber bearing according to either claim 5 or 6, **characterised in that** the pocket-shaped recesses (12) have like geometric dimensions.

8. Rubber bearing according to any one of claim 5 to 7, **characterised in that** the opening (21) of each pocket-shaped recess (12) is congruent with or smaller than the respective window-like opening (11).

9. that the central section (13) is designed as cylindrical.

10. Rubber bearing according to any one of the preceding claims, **characterised in that** the axial ends of the inner part (4) are widened.

11. Rubber bearing according to any one of the preceding claims, **characterised in that** the rubber body (6) extends from the inner part (4) to the outer sleeve (5) and is connected to both the inner part (4) and to the external sleeve (5) in a firmly adhered manner.

## Revendications

1. Palier en caoutchouc avec une partie intérieure (4) s'étendant dans une direction axiale (2) et comprenant une zone de palier (3) bombée, avec un manchon extérieur (5) entourant la partie intérieure (4) et avec un corps en caoutchouc (6) disposé entre la partie intérieure (4) et le manchon extérieur (5) et entourant la partie intérieure (4), la zone (10) du manchon extérieur (5) entourant la zone de palier (3) étant constituée de façon saillante et comportant plusieurs ouvertures (11) du type fenêtre qui comportent chacune un contour périphérique fermé, la zone (10) saillante du manchon extérieur (5) comportant deux tronçons de bord (14, 15) et un tronçon central (13) qui est disposé dans la direction axiale (2) entre les tronçons de bord (14, 15) et se transforme en chacun des tronçons de bord (14, 15) qui se rétrécissent avec une distance axiale croissante par rapport au tronçon central (13), dans lequel les ouvertures (11) du type fenêtre sont prévues, **caractérisé en ce que** les ouvertures du type fenêtre sont disposées autour de la zone de palier (3).

2. Palier en caoutchouc selon la revendication 1, **caractérisé en ce que** le nombre d'ouvertures (11) du type fenêtre est égal à deux, au moins égal à deux ou quatre ou au moins égal à quatre.

3. Palier en caoutchouc selon la revendication 1 ou 2, **caractérisé en ce que** les ouvertures (11) du type fenêtre sont disposées de façon uniformément répartie autour de la zone de palier (3).

4. Palier en caoutchouc selon l'une des revendications précédentes, **caractérisé en ce que** les ouvertures (11) du type fenêtre présentent des dimensions géométriques identiques.

5. Palier en caoutchouc selon l'une des revendications précédentes, **caractérisé en ce que** plusieurs évidements (12) en forme de poche sont ménagés dans la surface périphérique extérieure du corps en caoutchouc (6) et se raccordent respectivement à l'une des ouvertures (11) du type fenêtre.

6. Palier en caoutchouc selon la revendication 5, **caractérisé en ce que** le nombre d'ouvertures (11) du type fenêtre correspond au nombre d'évidements (12) en forme de poche ou est supérieur au nombre d'évidements (12) en forme de poche.

7. Palier en caoutchouc selon la revendication 5 ou 6, **caractérisé en ce que** les évidements (12) en forme de poche présentent des dimensions géométriques identiques.

8. Palier en caoutchouc selon l'une des revendications 5 à 7, **caractérisé en ce que** l'ouverture (21) de chaque évidement (12) en forme de poche coïncide avec ou est plus petite que l'ouverture (11) du type fenêtre respective.

9. Palier en caoutchouc selon l'une des revendications précédentes, **caractérisé en ce que** le tronçon central (13) est constitué de façon cylindrique.

10. Palier en caoutchouc selon l'une des revendications précédentes, **caractérisé en ce que** la partie intérieure (4) est évasée à ses extrémités axiales.

11. Palier en caoutchouc selon l'une des revendications précédentes, **caractérisé en ce que** le corps en caoutchouc (6) s'étend de la partie intérieure (4) vers le manchon extérieur (5) et est raccordé par adhérence aussi bien à la partie intérieure (4) qu'au manchon extérieur (5).
